# EUROPÄISCHE PATENTSCHRIFT

(11) **EP 2 754 938 B1**
(45) Veröffentlichungstag und Bekanntmachung des Hinweises auf die Patenterteilung: **20.02.2019**
(21) Anmeldenummer: 13197682.1
(22) Anmeldetag: 17.12.2013
(51) Int. Cl.: F16L 19/02, F16L 19/025

(54) **Zusammenstellungsprodukt umfassend einen Schraubnippel und eine Schraubbuchse sowie zugehöriges Hydrauliksystem**
Assembled product comprising a screw nipple and a threaded bushing, and an associated hydraulic system
Produit assemblé comprenant un raccord taraudé et une douille taraudée, et sytème hydraulique associé

(30) Priorität: 10.01.2013 DE 102013200251
(43) Veröffentlichungstag der Anmeldung: 16.07.2014
(73) Patentinhaber: SKF Lubrication Systems Germany AG, 12277 Berlin (DE)
(72) Erfinder: Witt, Marco, 10585 Berlin (DE)
(74) Vertreter: Kuhstrebe, Jochen

(56) Entgegenhaltungen:
- DE-A1- 1 959 098
- DE-U1- 9 406 708
- US-A- 2 696 395
- US-A- 3 288 494
- US-A- 5 131 695
- US-A- 5 890 746

## Beschreibung

Ausführungsbeispiele beziehen sich auf ein Zusammenstellungsprodukt zum stabilen und kompakten hydraulischen Verbinden zweier zueinander auszurichtender Hydraulikkomponenten sowie auf ein Hydrauliksystem.

In vielen technischen Gebieten des Anlagen-, Maschinen- und Fahrzeugbaus kommen Hydrauliksysteme zum Einsatz, mit deren Hilfe ein Hydraulikmedium verteilt und geführt wird. Dieses wird beispielsweise zur Leistungsübertragung, Kühlung, Schmierung und/oder einem anderen Zweck unterschiedlichen Komponenten einer entsprechenden Anlage oder Maschine bereitgestellt. Häufig werden diese in vergleichsweise beengten Verhältnissen eingesetzt, bei denen für die einzelnen Komponenten eines solchen Hydrauliksystems nur ein beschränkter Bauraum zur Verfügung steht. Eine Position der entsprechenden Komponenten kann so innerhalb der betreffenden Anlage oder Maschine durch weitere Randbedingungen bestimmt werden, die beispielsweise konstruktions- oder funktionsbedingt sind. Hierbei können Verbindungselemente eines solchen Hydrauliksystems beispielsweise auch mechanisch beansprucht werden, indem diese beispielsweise auch zur mechanischen Führung bzw. Fixierung entsprechender Komponenten wenigstens teilweise herangezogen werden.

So kann es beispielsweise notwendig sein, einzelne Hydraulikkomponenten an bestimmten Stellen im Inneren eines Gehäuses oder an einem anderen vorbestimmten Platz anzuordnen. Ebenso kann es gegebenenfalls notwendig oder zumindest ratsam sein, die betreffenden Komponenten zueinander derart auszurichten, dass diese zueinander eine entsprechende Orientierung aufweisen.

Erschwert werden diese Anforderungen häufig dadurch, dass die betreffenden Hydrauliksysteme für vergleichsweise hohe Drücke und/oder hohe Durchflussvolumina ausgelegt sind. Es können jedoch auch aufgrund einer notwendigen Kombination mit anderen, beispielsweise elektrischen Komponenten einer solchen Anlage oder Maschine eine hinsichtlich ihrer Funktion und der einzuhaltenden Sicherheitsrichtlinien resultierende Erschwernis beim Auslegen eines solchen Hydrauliksystems hinzutreten. Aber selbst wenn diese Gründe bei einem Hydrauliksystem einer Maschine, einer Anlage oder einem anderen System weniger relevant sind, kann es schon aus Umwelt- oder Wartungsgründen, jedoch auch aufgrund anderer Gegebenheiten ratsam sein, auf eine entsprechende Dichtheit des Hydrauliksystems zu achten.

Konventionelle Hydraulikverbindungen sind beispielsweise in den folgenden Druckschriften beschrieben. Die DE 19 59 098 A und die US 2,696,395 beziehen sich jeweils auf eine Rohrverbindung, bei der ein Rohr zwischen einen Nippel und eine Druckhülse geklemmt wird. Die DE 94 06 708 U1 betrifft eine Verbindung eines Anschlussstutzens eines Armaturengehäuses mit einer Anschlusstülle. Bei der US 5,890,746 ist ein Rohr radial innerhalb einer Schraubbuchse aufgenommen. Zur Verbindung können Verbindungstechniken wie Schweißen, Kaltverformen oder Hartlöten eingesetzt werden. Ein Schraubnippel kann auf die gleiche Art und Weise mit einem weiteren Rohr verbunden werden. Ähnlich wie die US 5,890,746 betreffen auch die US 5,131,695 und die US 3,288,494 Hydraulikverbindungen, bei denen Rohre radial innerhalb mit den Verbindungselementen verbunden werden.

Es besteht so ein Bedarf daran, eine leichter umzusetzende Verbindungstechnik zum stabilen und kompakten hydraulischen Verbinden zweier zueinander auszurichtender Hydraulikkomponenten zu schaffen.

Diesem Bedarf tragen ein Zusammenstellungsprodukt gemäß Patentanspruch 1 und ein Hydrauliksystem gemäß Patentanspruch 8 Rechnung.

Ein Schraubnippel zum stabilen und kompakten hydraulischen Verbinden zweier zueinander auszurichtender Hydraulikkomponenten, umfasst so einen Durchflusskanal, der ausgebildet ist, um die hydraulische Verbindung zwischen den zwei Hydraulikkomponenten wenigstens abschnittsweise zu schaffen. Er umfasst ferner ein Außenverbindungsgewinde, das derart ausgebildet und angeordnet ist, sodass dieses mit einem Innenverbindungsgewinde eines Überwurfbauteils einer an einer zweiten Hydraulikkomponente der zwei Hydraulikkomponenten montierten Schraubbuchse verschraubbar ist, um die stabile und kompakte hydraulische Verbindung zwischen den zwei Hydraulikkomponenten zu schaffen, wenn der Schraubnippel an der ersten Hydraulikkomponente montiert ist. Der Schraubnippel gemäß einem Ausführungsbeispiel umfasst ferner eine Aufnahme für eine Verbindungsweichdichtung, wobei die Aufnahme für die Verbindungsweichdichtung derart angeordnet ist, sodass die Verbindungsweichdichtung in einem verbundenen Zustand gegen eine Dichtfläche der Schraubbuchse gepresst wird, sodass ein Austreten einer Flüssigkeit aus dem Durchflusskanal zwischen dem Schraubnippel und der Schraubbuchse unterbunden wird.

Eine Schraubbuchse zum stabilen und kompakten hydraulischen Verbinden zweier zueinander auszurichtender Hydraulikkomponenten umfasst eine Schraubhülse und ein Überwurfbauteil, wobei die Schraubhülse einen Durchflusskanal umfasst, der ausgebildet ist, um die hydraulische Verbindung zwischen den zwei Hydraulikkomponenten wenigstens abschnittsweise zu schaffen. Das Überwurfbauteil umfasst ein Innenverbindungsgewinde, das derart ausgebildet und angeordnet ist, sodass dieses mit einem Außenverbindungsgewinde eines an einer ersten Hydraulikkomponente der zwei Hydraulikkomponenten montierten Schraubnippel verschraubbar ist, um die stabile und kompakte hydraulische Verbindung zwischen den zwei Hydraulikkomponenten zu schaffen, wenn die Schraubbuchse an der zweiten Hydraulikkomponente montiert ist.

Ein Zusammenstellungsprodukt gemäß einem Ausführungsbeispiel umfasst einen Schraubnippel gemäß einem Ausführungsbeispiel und eine Schraubbuchse gemäß einem Ausführungsbeispiel, die ausgebildet sind, und über das Außenverbindungsgewinde des Schraubnippels und das Innenverbindungsgewinde des Überwurfbauteils miteinander verbindbar zu sein.

Ein Hydrauliksystem gemäß einem Ausführungsbeispiel umfasst eine erste Hydraulikkomponente, eine zweite Hydraulikkomponente, einen Schraubnippel, der an der ersten Hydraulikkomponente montiert ist, eine Schraubbuchse, die an der zweiten Hydraulikkomponente montiert ist, und eine Verbindungsweichdichtung, die in der Aufnahme für die Verbindungsweichdichtung des Schraubnippels aufgenommen ist, wobei der Schraubnippel und die Schraubbuchse miteinander über das Außenverbindungsgewinde des Schraubnippels und das Innenverbindungsgewinde des Überwurfbauteils verbunden sind.

Ausführungsbeispielen liegt so die Erkenntnis zugrunde, dass eine leichter umzusetzende Verbindungstechnik zum stabilen und kompakten hydraulischen Verbinden zweier zueinander auszurichtender Hydraulikkomponenten dadurch ermöglicht wird, indem nicht zuletzt durch das Außenverbindungsgewinde des Schraubnippels und das korrespondierende Innenverbindungsgewinde des Überwurfbauteils eine stabile und dennoch kompakte mechanische Verbindung der betreffenden Hydraulikkomponenten durch das Schaffen einer entsprechenden formschlüssigen Verbindung entlang der Durchflusskanäle der betreffenden Bauteile ermöglicht wird. So kann durch die Verbindung beispielsweise eine gegebenenfalls genügend hohe Haftreibung erzeugt werden, sodass sich die betreffenden Komponenten auch bei einem größeren Eigengewicht und einem aufgrund der Schwerkraft auf sie einwirkenden Drehmoment nicht zueinander verdrehen.

Durch den Einsatz einer entsprechenden Verbindungsweichdichtung, also beispielsweise durch das Vorsehen der entsprechenden Aufnahme für diese und der dieser entsprechenden Dichtfläche, kann es so möglich sein, das stabile und kompakte hydraulische Verbinden der betreffenden Hydraulikkomponenten zu vereinfachen. So kann der Einsatz der Verbindungsweichdichtung beispielsweise eine flexiblere Verbindung der beiden Hydraulikkomponenten miteinander ermöglichen. Durch den Einsatz der zuvor beschriebenen Verschraubung und des Einsatzes der Verbindungsweichdichtung kann darüber hinaus die Ausrichtung der Hydraulikkomponenten zueinander schon dadurch vereinfacht werden, dass diese im Allgemeinen eine freiere Ausrichtung derselben zueinander noch während der eigentlichen Verschraubung, also der eigentlichen Verbindung ermöglichen.

Der Begriff "Verbindungsweichdichtung" bezieht sich hierbei darauf, dass zum Abdichten der Verbindung der beiden Hydraulikkomponenten eine Weichdichtung eingesetzt wird. Eine solche Weichdichtung kann beispielsweise ein elastisches Material, also beispielsweise ein elastisches Polymer oder einen ähnlichen elastischen Werkstoff umfassen. Eine entsprechende Weichdichtung kann aus einem solchen Material auch gebildet sein. Unter eine Weichdichtung fällt jedoch beispielsweise nicht eine vollständig aus einem Metall, beispielsweise Kupfer, bestehende Dichtung, bei der typischerweise wenigstens ein Verbindungspartner eine Schnittkante aufweist, um in die betreffende Dichtung eine Dichtnut zu schneiden bzw. zu drücken.

So kann es durch den Einsatz einer Weichdichtung aufgrund ihrer größeren Kompressibilität eventuell möglich sein, die Ausrichtung der Hydraulikkomponenten zueinander auch entlang der Durchflusskanäle des Schraubnippels und der Schraubbuchse zu ermöglichen, da aufgrund der Deformierbarkeit einer Weichdichtung eine Dichtwirkung zu einem früheren Zeitpunkt als bei einer metallischen Dichtung möglich ist.

Optional kann bei einem Schraubnippel gemäß einem Ausführungsbeispiel die Aufnahme für die Verbindungsweichdichtung an einer dem Durchflusskanal abgewandten Seite angeordnet sein. Hierdurch kann es möglich sein, einen Durchfluss der Flüssigkeit durch die hydraulische Verbindung, welche den Schraubnippel gemäß einem Ausführungsbeispiel umfasst, widerstandsärmer zu ermöglichen, da eine gegebenenfalls mit der Verbindungsweichdichtung einhergehende Ausnehmung nicht im unmittelbaren Strömungsbereich der Flüssigkeit liegt. Hierdurch kann es so möglich sein, eine Wirbelbildung im Bereich des Durchflusskanals zu reduzieren.

Optional kann ein Schraubnippel gemäß einem Ausführungsbeispiel ferner einen Führungsabschnitt aufweisen, der ausgebildet ist, um einen Fluss einer durch den Durchflusskanal durchströmenden Flüssigkeit zu führen, und der sich an einer der ersten Hydraulikkomponente abgewandten Seite des Schraubnippels entlang des Durchflusskanals über eine Position der Aufnahme für die Verbindungsweichdichtung hinauserstreckt, wobei der Schraubnippel an der ersten Hydraulikkomponente montierbar ist. Auch hierdurch kann es gegebenenfalls möglich sein, eine Wirbelbildung in der Flüssigkeit in dem Durchflusskanal zu reduzieren, und so einen reibungsärmeren Transport der Flüssigkeit durch die Verbindung zu ermöglichen. Anders ausgedrückt kann optional die Aufnahme für die Verbindungsweichdichtung an einer dem Durchflusskanal abgewandten Seite des Führungsabschnitts angeordnet sein.

Optional kann ein Schraubnippel gemäß einem Ausführungsbeispiel im Wesentlichen rotationssymmetrisch ausgestaltet sein oder eine ganzzahlige Rotationssymmetrie aufweisen. Hierdurch kann es gegebenenfalls möglich sein, eine Ausrichtfähigkeit der Hydraulikkomponenten zueinander dadurch weiter zu steigern, indem eine Lage des Schraubnippels in der ersten hydraulischen Komponente aufgrund der definierten Rotationssymmetrie einen geringeren Einfluss hat.

Eine Komponente kann beispielsweise eine n-zählige Rotationssymmetrie aufweisen, wobei n eine natürliche Zahl größer oder gleich 2 ist. Eine n-zählige Rotationssymmetrie liegt dann vor, wenn die betreffende Komponente beispielsweise um eine Rotations- oder Symmetrieachse um (360°/n) drehbar ist und dabei im Wesentlichen formenmäßig in sich selbst übergeht, also bei einer entsprechenden Drehung im Wesentlichen auf sich selbst im mathematischen Sinn abgebildet wird. Im Unterschied hierzu geht bei einer vollständigen rotationssymmetrischen Ausgestaltung einer Komponente bei einer beliebigen Drehung um jeden beliebigen Winkel um die Rotations- oder Symmetrieachse die Komponente formenmäßig im Wesentlichen in sich selbst über, wird also im mathematischen Sinn im Wesentlichen auf sich selbst abgebildet. Sowohl eine n-zählige Rotationssymmetrie wie auch eine vollständige Rotationssymmetrie wird hierbei als Rotationssymmetrie bezeichnet.

Erfindungsgemäß umfasst der Schraubnippel ferner ein beispielsweise parallel zu dem Außenverbindungsgewinde ausgerichtetes Außenmontagegewinde, das ausgebildet ist, um in ein Innenmontagegewinde einer ersten Hydraulikkomponente der zwei miteinander zu verbindenden Hydraulikkomponenten einschraubbar zu sein. Der Schraubnippel kann optional ferner eine Aufnahme für eine Montageweichdichtung umfassen, die derart ausgebildet und angeordnet ist, um ein Austreten der Flüssigkeit aus dem Durchflusskanal zwischen dem Schraubnippel und der ersten Hydraulikkomponente zu unterbinden, wobei die Aufnahme für die Montageweichdichtung derart angeordnet ist, sodass die Montageweichdichtung in einem montierten Zustand gegen eine Dichtfläche der ersten Hydraulikkomponente gepresst wird.

Optional können hierbei das Außenverbindungsgewinde und das Außenmontagegewinde des Schraubnippels selbstverständlich hinsichtlich ihres Drehsinns unterschiedlich ausgeführt sein. Ergänzend oder alternativ können sie ebenso hinsichtlich ihrer Durchmesser, Steigung und anderer gewindetypische Parameter identisch oder abweichend voneinander ausgeführt werden. Hierdurch kann es möglich sein, den Schraubnippel ebenso mechanisch stabil und auf einfache Art und Weise in der ersten Hydraulikkomponente zu montieren. Auch im Hinblick auf die Montageweichdichtung gilt, dass zuvor im Zusammenhang mit der Verbindungsweichdichtung erläuterte.

Optional kann eine Schraubbuchse gemäß einem Ausführungsbeispiel ferner eine Dichtfläche umfassen, die derart ausgebildet und angeordnet ist, sodass eine in eine Aufnahme für eine Verbindungsweichdichtung des Schraubnippels aufgenommene Verbindungsweichdichtung in einem verbundenen Zustand von der Schraubbuchse und dem Schraubnippel gegen die Dichtfläche gepresst wird, um so ein Austreten einer Flüssigkeit aus dem Durchflusskanal zwischen dem Schraubnippel und der Schraubbuchse zu unterbinden. Die Dichtfläche kann hierbei beispielsweise im Vergleich zu anderen Flächen der Schraubbuchse eine höhere Planarität oder eine andere höhere Güteklasse im Hinblick auf eine Toleranz oder eine Oberflächenbeschaffenheit aufweisen. Die Dichtfläche kann so beispielsweise angeschliffen, angespiegelt oder mithilfe eines anderen Oberflächenbehandlungsverfahrens behandelt sein.

Optional kann eine Schraubbuchse gemäß einem Ausführungsbeispiel eine im Wesentlichen ganzzahlige Rotationssymmetrie aufweisen. Auch hierdurch kann es gegebenenfalls möglich sein, eine freiere Ausrichtbarkeit der beiden Hydraulikkomponenten zueinander während des Schaffens der Verbindung der ermöglichen.

Erfindungsgemäß umfasst die Schraubbuchse ferner ein beispielsweise parallel zu dem Innenverbindungsgewinde ausgerichtetes Außenmontagegewinde, das ausgebildet ist, um in ein Innenmontagegewinde einer zweiten Hydraulikkomponente der zwei miteinander zu verbindenden Hydraulikkomponenten einschraubbar zu sein. Die Schraubbuchse kann optional ferner eine Aufnahme für eine Montageweichdichtung umfassen, die derart ausgebildet und angeordnet ist, um ein Austreten einer Flüssigkeit aus dem Durchflusskanal zwischen dem Schraubnippel und der zweiten Hydraulikkomponente zu unterbinden, wobei die Aufnahme für die Montageweichdichtung derart angeordnet ist, sodass die Montageweichdichtung in einem montierten Zustand gegen eine Dichtfläche der zweiten Hydraulikkomponente gepresst wird. Auch für das Außenmontagegewinde der Schraubbuchse gilt das im Zusammenhang mit dem Außenmontagegewinde des Schraubnippels Gesagte. Gleiches gilt ebenso für die Montageweichdichtung. Auch hierdurch kann es gegebenenfalls wieder möglich sein, eine leichtere Montage der Schraubbuchse in der zweiten Hydraulikkomponente zu ermöglichen.

Optional kann eine Schraubbuchse gemäß einem Ausführungsbeispiel ferner eine Aufnahme für einen Führungsabschnitt gemäß einem Ausführungsbeispiel aufweisen, wobei die Aufnahme für den Führungsabschnitt so ausgebildet ist, um einen Fluss einer durch den Durchflusskanal strömenden Flüssigkeit zu führen, wobei die Aufnahme bezogen auf das Überwurfbauteil auf einer dem Überwurfbauteil abgewandten Seite hin zurückversetzt angeordnet ist, wenn die Schraubbuchse mit dem Schraubnippel mechanisch verbunden ist. So kann in dem verbundenen Zustand die Aufnahme für den Führungsabschnitt beispielsweise auch bezogen auf die Dichtfläche der Schraubbuchse hin zurückversetzt angeordnet sein. Wie bereits im Zusammenhang mit dem Führungsabschnitt des Schraubnippels erläutert wurde, kann es hierdurch gegebenenfalls möglich sein, eine wirbelärmere und damit strömungsgünstigere Führung der Flüssigkeit in dem Durchflusskanal zu erzielen.

Optional kann bei einer Schraubbuchse gemäß einem Ausführungsbeispiel die Schraubhülse eine Haltestruktur aufweisen, wobei die Haltestruktur und das Überwurfbauteil derart ausgebildet sind, um bei einem Verbinden der Schraubbuchse mit einem Schraubnippel entlang des Durchflusskanals in beide Richtungen eine formschlüssige Verbindung zwischen der Schraubbuchse und der Schraubhülse zu schaffen. Hierdurch kann es eventuell möglich sein, eine mechanisch stabilere und aufgrund der bereits zuvor beschriebenen und durch die Haftreibung hervorgerufenen Haltekräfte auch verdrehsichere Verbindung der beiden Hydraulikkomponente zueinander zu schaffen.

Hierbei kommt eine kraftschlüssige oder reibschlüssige Verbindung durch Haftreibung, eine stoffschlüssige Verbindung durch molekulare oder atomare Wechselwirkungen und Kräfte und eine formschlüssige Verbindung durch eine geometrische Verbindung der betreffenden Verbindungspartner zustande. Die Haftreibung setzt somit insbesondere eine Normalkraftkomponente zwischen den beiden Verbindungspartnern voraus.

Optional kann bei einem Hydrauliksystem gemäß einem Ausführungsbeispiel die erste Hydraulikkomponente von der zweiten Hydraulikkomponente beispielsweise einen Abstand voneinander entlang der Durchflusskanäle des Schraubnippels und der Schraubbuchse aufweisen, der höchstens 150 % einer Länge des Überwurfbauteils der Schraubbuchse entlang ihres Durchflusskanals entspricht. So kann aufgrund der Verwendung des Außenverbindungsgewindes des Schraubnippels und des Innenverbindungsgewindes des Überwurfbauteils der Schraubbuchse eine kompakte und damit bauraumsparendere Verbindung des Schraubnippels mit der Schraubbuchse, und damit der beiden Hydraulikkomponenten geschaffen werden. Bei anderen Ausführungsbeispielen kann es gegebenenfalls möglich sein, den Abstand der beiden Hydraulikkomponenten voneinander entlang der Durchflusskanäle des Schraubnippels und der Schraubbuchse auf höchstens 130 % oder höchstens 120 %, eventuell sogar auf höchstens 110 % einer Länge des Überwurfbauteils der Schraubbuchse entlang des Durchflusskanals zu begrenzen.

Eine mechanische Kopplung zweier Komponenten umfasst hierbei sowohl eine unmittelbare, wie auch eine mittelbare Kopplung. Elektrische oder andere Komponenten sind hierbei miteinander mittelbar über eine weitere Komponente oder unmittelbar miteinander derart gekoppelt, dass diese einen Signalaustausch zwischen den betreffenden Komponenten ermöglichen. So kann die entsprechende Kopplung abschnittsweise oder vollständig beispielsweise elektrisch, optisch, magnetisch oder mittels Funktechnik implementiert und umgesetzt sein.

Unter einer einstückig ausgebildeten Komponente wird eine solche verstanden, die genau aus einem zusammenhängenden Materialstück gefertigt ist. Der Begriff "einstückig" kann daher synonym mit den Begriffen "integral" oder "einteilig" verwendet werden. Nachfolgend werden unter Bezugnahme auf die beigefügten Figuren Ausführungsbeispiele näher beschrieben und erläutert.
- Fig. 1: zeigt eine Querschnittsdarstellung durch einen Schraubnippel gemäß einem Ausführungsbeispiel und einer Schraubbuchse gemäß einem Ausführungsbeispiel, die miteinander verbunden sind;
- Fig. 2: zeigt eine Querschnittsdarstellung durch eine erste Hydraulikkomponente, eine zweite Hydraulikkomponente und einen Schraubnippel sowie eine Schraubbuchse gemäß einem Ausführungsbeispiel, wobei der Schraubnippel an der ersten Hydraulikkomponente und die Schraubbuchse an der zweiten Hydraulikkomponente montiert sind, Schraubnippel und Schraubbuchse jedoch nicht miteinander verbunden sind;
- Fig. 3: zeigt eine Fig. 2 ähnliche Darstellung, bei der der Schraubnippel und die Schraubbuchse jedoch miteinander verbunden sind und so ein Hydrauliksystem gemäß einem Ausführungsbeispiel bilden.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Wie dies bereit eingangs kurz erwähnt wurde, werden Hydrauliksysteme in vielen Bereichen des Maschinen-, Anlagen- und Fahrzeugbaus eingesetzt, um ein Hydraulikmedium, also eine Flüssigkeit, zwischen verschiedenen Komponenten des betreffenden Systems zu transferieren. Die Flüssigkeit dient hierbei beispielsweise zur Leistungsübertragung, jedoch auch zur Kühlung, Schmierung oder anderer Anwendungen. Die betreffenden Hydraulikkomponenten werden hierbei häufig in beengten Verhältnissen eingesetzt. So kann es eventuell passieren, dass die betreffenden Hydraulikkomponenten an vorbestimmten Orten eingebaut oder anderen Randbedingungen gehorchen müssen, die beispielsweise konstruktions- oder aber auch betriebsbedingt sind.

Hierbei wird häufig die Situation dadurch erschwert, dass die zu transferierende Flüssigkeit unter einem höheren Druck steht oder eine entsprechende Durchflussmenge transportiert werden muss. Sie werden jedoch auch im Zusammenhang mit anderen, beispielsweise elektrischen Komponenten und Anlagenteilen eingesetzt, aus denen sich beispielsweise besondere Anforderungen hinsichtlich Dichtigkeit ergeben können. Jedoch aus umwelt- und wartungsspezifischen Gründen können entsprechende Anforderungen an die Dichtigkeit gestellt werden.

Erschwerend kann es dabei noch hinzukommen, dass die betreffenden Hydraulikkomponenten aufgrund ihrer Anordnung und Ausrichtung in den betreffenden Maschinen oder Anlagen auch zueinander entsprechend ausgerichtet sein müssen. Beispiele eines solchen Hydrauliksystems umfassen beispielsweise solche, bei denen Kolbenverteiler, die beispielsweise für Drücke von mehreren 10 bis 100 bar ausgelegt sind, umfasst sind. Konventionell werden solche Kolbenverteiler mittels Gewindestücken und Kupferdichtring miteinander verbunden. Um die Kolbenverteiler hierbei zueinander auszurichten, werden hierbei unterschiedlich starke Kupferdichtringe verwendet. Die Stärke des jeweiligen Dichtrings ist hierbei also aufwendig zu ermitteln. Zusätzlich wird das Gewindestück häufig mit einem hochfesten Sicherungsklebstoff eingesetzt.

Dies führt dazu, dass der Montageaufwand entsprechender Hydrauliksysteme hoch und die Prozesssicherheit häufig nur bedingt gegeben ist, da die Verteiler in einem vorgeschriebenen Drehmomentbereich, der durch einen minimalen und einen maximalen Wert gegeben ist, häufig nicht zueinander ausrichtbar sind, also nicht auf Stellung bzw. Flucht gebracht werden können. Auch handelsübliche Verschraubungen stellen hierbei keine Alternative dar, da diese im Allgemeinen sehr groß bauen und daher gerade in beengten Platzverhältnissen nicht eingesetzt werden können.

Ausführungsbeispiele können so jedoch gegebenenfalls eine Verbindungstechnik schaffen, die einfacheres bzw. leichteres Schaffen einer stabilen und kompakten hydraulischen Verbindung zweier zueinander auszurichtender Hydraulikkomponenten ermöglicht. Hierdurch kann im Vergleich zu einer konventionellen Lösung gegebenenfalls eine einfachere und schnellere Montage der Hydrauliksysteme, also beispielsweise Kolbenverteilern, leisten, gegebenenfalls eine höhere Prozesssicherheit und eine leichter lösbare Verbindung geschaffen werden. Ebenso kann gegebenenfalls erst vor Ort die Stellung der Hydraulikkomponenten zueinander also beispielsweise die Verteilerstellung zueinander bestimmt bzw. nachträglich noch variiert werden. Auch können durch den Einsatz entsprechender Schraubnippel bzw. Schraubbuchsen gemäß einem Ausführungsbeispiel gegebenenfalls unterschiedliche Typen und Systeme von Hydraulikkomponenten miteinander kombiniert werden. Ebenso kann es gegebenenfalls möglich sein, Einsparungen zu reduzieren, da konventionelle Kupferdichtringe unterschiedlicher Stärken hierdurch eingespart werden können. An ihrer Stelle werden, wie die nachfolgende Beschreibung noch zeigen wird, Weichdichtungen verwendet. Ebenso kann es gegebenenfalls durch den Einsatz entsprechender Ausführungsbeispiele möglich sein, eine oder mehrere teure und gegebenenfalls wartungsintensive Montagevorrichtungen sowie den zusätzlichen Sicherungsklebstoff einzusparen.

Auch wenn im Rahmen der weiteren Beschreibung Ausführungsbeispiele stets im Zusammenhang mit Kolbenverteilern beschrieben werden, sind diese jedoch bei Weitem nicht auf den Einsatz mit solchen beschränkt. So können Schraubnippel sowie Schraubbuchsen gemäß Ausführungsbeispielen auch im Rahmen anderer Hydraulikkomponenten und damit anderer Hydrauliksysteme zum Einsatz kommen. Der nachfolgende Bezug auf Kolbenverteiler stellt so lediglich ein mögliches Beispiel einer Anwendung dar.

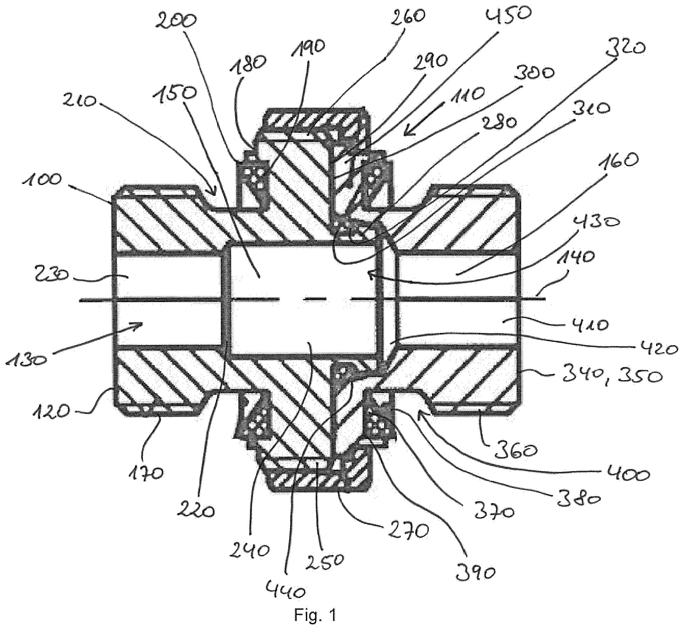

Fig. 1 zeigt eine Querschnittsdarstellung durch einen Schraubnippel 100 und eine mit diesem verbundene bzw. mit diesem gekoppelte Schraubbuchse 110. Beide werden auch vereinfachend als miteinander gekoppelte bzw. verbundene Verbinder bezeichnet.

Der Schraubnippel 100 ist bei dem hier gezeigten Ausführungsbeispiel auf Basis eines Grundkörpers 120 und somit einteilig bzw. einstückig hergestellt. Bei anderen Ausführungsbeispielen kann er selbstverständlich auch mehrstückig ausgeführt sein. Der Grundkörper 120 des Schraubnippels 100 weist eine zentrale Ausnehmung 130 auf, die sich entlang einer Symmetrieachse 140 des Schraubnippels 100 und der Schraubbuchse 110 erstreckt. Die Symmetrieachse 140 stellt hierbei auch eine Verbindungsrichtung für den Durchfluss des Hydraulikmediums bzw. der Flüssigkeit durch den Schraubnippel 100 und die Schraubbuchse 110 dar. Wie nachfolgend noch detaillierter erläutert wird, kann der Schraubnippel 100 beispielsweise eine vollständige bzw. eine ganzzahlige Rotationssymmetrie aufweisen, während die Schraubbuchse 110 häufig eine ganzzahlige Rotationssymmetrie aufweist.

Die zentrale Ausnehmung 130 bildet hierbei im Bereich des Schraubnippels 100 einen Durchflusskanal 150 des Schraubnippels 100 und einen Durchflusskanal 160 der Schraubbuchse 110. Die zentrale Ausnehmung 130 durch Schraubnippel 100 und Schraubbuchse 110 schafft so die hydraulische Verbindung zwischen den in Fig. 1 nicht gezeigten hydraulischen Komponenten.

Der Schraubnippel 100 weist ein Außenmontagegewinde 170 auf, welches an einer der Schraubbuchse 110 in dem mit dieser verbundenen Zustand abgewandten Seite angeordnet ist. Das Außenmontagegewinde 170 ist hierbei ausgebildet, um in ein Innenmontagegewinde der zuvor bereits genannten ersten Hydraulikkomponente, welche jedoch in Fig. 1 nicht gezeigt ist, einschraubbar zu sein, sodass der Schraubnippel 100 mit dieser mechanisch stabil verbindbar ist. Um hierbei eine Abdichtung des Durchflusskanals 150 gegenüber einem Austreten der Flüssigkeit zwischen der ersten Hydraulikkomponente und dem Schraubnippel 100 zu ermöglichen, weist dieser in einer der ersten Hydraulikkomponente zugewandten Begrenzungsfläche 180 eine Aufnahme 190 für eine Montageweichdichtung 200 auf. Bei der Montageweichdichtung 200 handelt es sich um eine Weichdichtung, die also wenigstens abschnittsweise ein elastisches Material aufweist, welches sich bei einer entsprechenden mechanischen Beanspruchung derart elastisch verformt, sodass ein Austreten der Flüssigkeit entlang der Bauteile, mit der die Weichdichtung in Kontakt steht, zumindest im Wesentlichen reduziert, wenn nicht sogar vollständig unterbunden wird. Die Weichdichtung 200 kann so beispielsweise aus einem elastisch verformbaren polymeren Werkstoff, beispielsweise einem Gummi (z. B. NBR; engl. Nitrile Butadiene Rubber; Nitrilkautschuk) gefertigt sein oder zumindest dieses Material umfassen. Bei der Montageweichdichtung 200 handelt es sich bei dem in Fig. 1 gezeigten Ausführungsbeispiel um eine Profildichtung bzw. einen Profildichtring. Die Montageweichdichtung 200 kann so ein Austreten der Flüssigkeit aus dem Durchflusskanal 150 zwischen dem Schraubnippel 100 und der ersten Hydraulikkomponente unterbinden. Die Montageweichdichtung 200 wird hierbei in einem solchen montierten Zustand gegen eine entsprechende Dichtfläche der ersten Hydraulikkomponente gepresst.

Zu diesem Zweck ist die Aufnahme 190 für die Montageweichdichtung 200 in einer gegenüber dem Außenmontagegewinde 170 radial nach innen versetzen Ausnehmung 210 angeordnet. Darüber hinaus ist bei dem hier gezeigten Ausführungsbeispiel eines Schraubnippels 100 entlang der Symmetrieachse 140 die Aufnahme 190 durch die Ausnehmung 210 auch axial von dem Außenmontagegewinde 170 beabstandet.

Die zentrale Ausnehmung im Bereich des Schraubnippels 100 weist hierbei - abgesehen von einem Übergangsbereich 220 - einen der ersten Hydraulikkomponente zugewandten ersten Abschnitt 230 und einen der Schraubbuchse 110 zugewandten zweiten Abschnitt 240 auf, die voneinander durch den Übergangsbereich 220 getrennt sind. Der zweite Abschnitt 240 weist hierbei senkrecht zu der Symmetrieachse 140 einen wesentlichen kreisrunden Querschnitt auf, der einen größeren Durchmesser als eine charakteristische Länge senkrecht zu der Symmetrieachse 140 des ersten Abschnitts 230 aufweist. Der erste Abschnitt 230 weist bei dem hier gezeigten Ausführungsbeispiel senkrecht zu der Symmetrieachse 140 einen polygonalen Querschnitt auf, der ein Festschrauben des Schraubnippels 100 über das Außenmontagegewinde 170 in der ersten Hydraulikkomponente ermöglicht. So kann der erste Abschnitt 230 beispielsweise einen viereckigen Querschnitt, einen fünfeckigen Querschnitt, einen achteckigen Querschnitt oder einen anderen polygonalen Querschnitt aufweisen. Hierbei kann es je nach konkreter Ausgestaltung und Anwendung gegebenenfalls ratsam sein, einen gleichmäßigen polygonalen Querschnitt zu implementieren, um beispielsweise ein Einsetzten eines entsprechenden Werkzeugs unter verschiedenen Winkeln zu ermöglichen. Genauso gut kann es jedoch auch ratsam sein, um beispielsweise eine definierte Anzahl von Umdrehungen beim Einbau des Schraubnippels 100 in die erste Hydraulikkomponente zu gewährleisten, einen ersten Abschnitt 230 mit einer ungleichmäßigen polygonalen Querschnittsform zu implementieren.

Aufgrund der polygonalen Ausgestaltung des ersten Abschnitts 230 weist so bei dem hier gezeigten Ausführungsbeispiel eines Schraubnippels 100 dieser nur eine ganzzahlige, im Wesentlichen durch die Querschnittsform des ersten Abschnitts 230 gegebene Rotationssymmetrie auf. Wird bei einem anderen Ausführungsbeispiel ein solcher erster Abschnitt mit einem polygonalen Querschnitt senkrecht zu der Symmetrieachse 140 nicht implementiert, kann so der Schraubnippel 100 beispielsweise im Wesentlichen vollständig rotationssymmetrisch ausgestattet sein. Brechungen der Symmetrie, wie sie beispielsweise durch die Gewindegänge der betreffenden Gewinde 170 hervorgerufen werden, bleiben hierbei außer Betracht.

Der Schraubnippel 100 weist ferner ein Außenverbindungsgewinde 250 auf, welches an einer der Schraubbuchse 110 zugewandten Seite radial außen angeordnet ist. Das Außenverbindungsgewinde 250 ist also an einer dem Außenmontagegewinde 170 abgewandten Seite angeordnet. Zumindest bei dem hier gezeigten Ausführungsbeispiel ist so die Aufnahme 190 für die Montageweichdichtung 200 entlang der Symmetrieachse 140 zwischen dem Außenverbindungsgewinde 250 und dem Außenmontagegewinde 170 angeordnet.

Das Außenverbindungsgewinde 250 ist hierbei gerade so ausgebildet und angeordnet, sodass dieses mit einem Innenverbindungsgewinde 260 eines Überwurfbauteils 270 der Schraubbuchse 110 verschraubbar ist. Durch diese mechanische Verbindung des Außenverbindungsgewindes 250 des Schraubnippels 100 und des Innenverbindungsgewindes 260 des Überwurfbauteils 270 der Schraubbuchse 110 kann so die stabile und kompakte hydraulische Verbindung zwischen den zwei Hydraulikkomponenten, die in Fig. 1 nicht gezeigt sind, geschaffen werden, wenn der Schraubnippel 100 und die Schraubbuchse 110 an der ersten bzw. zweiten Hydraulikkomponente montiert sind.

Bevor jedoch im Zusammenhang mit dem Überwurfbauteil 270 die Schraubbuchse 110 näher beschrieben wird, soll an dieser Stelle bereits darauf hingewiesen werden, dass der Schraubnippel 100 ferner einen Führungsabschnitt 280 aufweist, der sich im Wesentlichen parallel zu der Symmetrieachse 140 und damit im Wesentlichen parallel zu dem Durchflusskanal 150 des Schraubnippels 100 erstreckt. Der Führungsabschnitt 280 begrenzt hierbei den Durchflusskanal 150 im Wesentlichen radial, umschließt ihn also wenigstens abschnittsweise zylindermantelflächenförmig. Der Führungsabschnitt 280 ist hierbei nun gerade so ausgestaltet, sodass dieser einen Fluss der durch den Durchflusskanal 150 und den Durchflusskanal 160 strömenden Flüssigkeit führt, um so das Entstehen von Verwirbelungen zu reduzieren und so einen Widerstand für den entsprechenden Strom zu reduzieren. Um dies zu ermöglichen, erstreckt sich der Führungsabschnitt 280 über eine Anschlagsfläche 290 entlang der Symmetrieachse 140 hinaus, wobei die Anschlagsfläche 290 gerade dazu dient, um gegebenenfalls mit einer Begrenzungsfläche 300 der Schraubbuchse 110 in Kontakt zu treten und so eine maximale Annäherung der beiden Bauteile definiert. Die Anschlagsfläche 290 und die Begrenzungsfläche 300 sind hierbei parallel zueinander und senkrecht zu der Symmetrieachse 140 ausgerichtet.

An einer dem Durchflusskanal 150 und damit der Symmetrieachse 140 abgewandten Seite weist der Schraubnippel 100 ferner eine Aufnahme 310 für eine Verbindungsweichdichtung 320 auf. Die Verbindungsweichdichtung 320 ist hierbei ebenfalls als Weichdichtung implementiert, wie diese bereits im Zusammenhang mit der Montageweichdichtung 200 beschrieben wurde. Die Aufnahme 310 für die Verbindungsweichdichtung 320 ist hierbei als Nut in dem Führungsabschnitt 280 ausgeführt, sodass die Verbindungsweichdichtung 320 beispielsweise als O-Ring bzw. als O-Ringdichtung implementiert sein kann.

Die Schraubbuchse 110 weist neben dem Überwurfbauteil 270 ferner eine Schraubhülse 340 auf. Die Schraubhülse 340 ist hierbei, wie auch der Schraubnippel 100, einteilig ausgeführt, basiert also auf einem weiteren Grundkörper 350. Auch sie weist an einer dem Schraubnippel 100 abgewandten Seite ein Außenmontagegewinde 360 auf, welches ausgebildet ist, um mit einem entsprechenden Montageinnengewinde einer zweiten Hydraulikkomponente, die ebenfalls in Fig. 1 nicht gezeigt ist, verschraubt zu werden. Durch diese Verschraubung des Außenmontagegewindes 360 mit dem entsprechenden Innenmontagegewinde der zweiten Hydraulikkomponente kann auch hier eine mechanisch belastbare und stabile Verbindung der Schraubhülse 340 der Schraubbuchse 110 mit der zweiten Hydraulikkomponente geschaffen werden.

Um auch hier ein Austreten der Flüssigkeit aus dem Durchflusskanal 160 der Schraubbuchse 110 zwischen dieser und der zweiten Hydraulikkomponente möglichst vollständig zu unterbinden, weist die Schraubbuchse 110 bzw. ihre Schraubhülse 340 ebenfalls eine Aufnahme 370 für eine Montageweichdichtung 380 auf. Auch diese ist an einer Begrenzungsfläche 390 angeordnet, die der zweiten Hydraulikkomponente bzw. dem Außenmontagegewinde 360 zugewandt ist. Bei dem hier gezeigten Ausführungsbeispiel sind die Begrenzungsflächen 300, 390 des Schraubnippels 100 und der Schraubbuchse 110 jeweils senkrecht zu der gemeinsamen Symmetrieachse 140 ausgerichtet. Auch hier ist wiederum die Aufnahme 370 für die Montageweichdichtung 380 radial weiter innen liegend als das Außenmontagegewinde 360 angeordnet. Ebenso ist auch hier wieder eine axiale Beabstandung zwischen dem Außenmontagegewinde 360 und der Aufnahme 370 für die Montageweichdichtung 370 durch eine entsprechende Ausnehmung 400 vorgesehen und implementiert.

Auch die Schraubbuchse 110 weist einen dem ersten Abschnitt 230 des Schraubnippels 100 entsprechenden ersten Abschnitt 410 auf, der radial innen liegend zu dem Außenmontagegewinde 360 der Schraubbuchse 110 angeordnet ist. Der erste Abschnitt 410 weist ebenso wie der erste Abschnitt 230 des Schraubnippels 100 einen polygonalen Querschnitt senkrecht zu der Symmetrieachse 140 auf. Durch diesen kann die Schraubbuchse 110 in der zweiten Hydraulikkomponente mithilfe eines entsprechend geformten Werkzeugs gegebenenfalls leichter und damit sicherer eingeschraubt werden.

An den ersten Abschnitt 410 schließt sich ein Übergangsbereich entlang der Symmetrieachse 140 an, der in einen in Fig. 1 nur schwer erkennbaren Bereich übergeht, der als Aufnahme 430 für den Führungsabschnitt 280 dient. Die Aufnahme 430 ist hierbei so ausgebildet und angeordnet, dass ein Fluss, der durch die Durchflusskanäle 150, 160 strömenden Flüssigkeit geführt wird. Die Aufnahme 430 ist hierbei bezogen auf das Überwurfbauteil 270 auf einer dem Überwurfbauteil 270 abgewandten Seite hin zurück versetzt angeordnet, zumindest wenn die Schraubbuchse 110 mit dem Schraubnippel 100 verbunden ist. Die Aufnahme 430 weist hierbei einen größeren Radius als eine charakteristische Länge senkrecht zu der Symmetrieachse 140 des ersten Abschnitts 410 auf. Entsprechend weist der Übergangsbereich 420 angeschrägte Flanken auf, ist also konisch zulaufend ausgebildet und mündet in dem ersten Abschnitt 410 einerseits und der Aufnahme 430 für den Führungsabschnitt 280 andererseits.
Bei dem hier gezeigten Ausführungsbeispiel weist die Aufnahme 430 für den Führungsabschnitt 280 ebenfalls eine schräg zulaufende bzw. konisch ausgestaltete Form auf, wobei diese wenigstens abschnittsweise als Dichtfläche 440 ausgestaltet ist, gegen die die Verbindungsweichdichtung 320 bei der Verbindung des Schraubnippels 100 mit der Schraubbuchse 110 gepresst wird. Die Dichtfläche 440 kann hierbei wie auch die Dichtflächen der beiden in Fig. 1 nicht gezeigten Hydraulikkomponenten entsprechend oberflächenbehandelt sein, beispielsweise geschliffen, abgedreht oder mit einem anderen Verfahren bearbeitet worden, sodass dieses beispielsweise gegenüber anderen Abschnitten der betreffenden Bauteile eine höhere Güteklasse hinsichtlich ihrer Oberflächenbeschaffenheit aufweist. Hierdurch kann es gegebenenfalls möglich sein, eine Dichtwirkung der betreffenden Weichdichtungen, also beispielsweise der Verbindungsweichdichtung 320, zu verbessern.

Das Überwurfbauteil 270 weist, wie bereits zuvor erläutert wurde, das Innenverbindungsgewinde 260 an einem im Wesentlichen zylinderförmigen Abschnitt auf. In diesem Bereich weist das Überwurfbauteil an einer Außenseite, also radial außen liegend bei dem hier gezeigten Ausführungsbeispiel eine polygonale Querschnittsform auf, mit deren Hilfe beispielsweise der Einsatz eines Schraubenschlüssels oder einer anderen Zange zum Schaffen der Verbindung zwischen dem Schraubnippel 100 und der Schraubbuchse 110 durch ein entsprechendes Anziehen des Überwurfbauteils 270 erleichtert wird. Durch diese polygonale Außenkontur des Überwurfbauteils 270 und die optionale Ausgestaltung des ersten Abschnitts 410 weist die Schraubbuchse 110, wie sie in Fig. 1 gezeigt ist, eine ganzzahlige Rotationssymmetrie auf. Hierbei ist das Überwurfbauteil 270 bezogen auf die Schraubhülse 340 beliebig bzw. frei drehbar. Je nach konkreter Ausgestaltung kann so das Überwurfbauteil 270 beispielsweise auch mehr als um 360° um die Symmetrieachse 140 drehbar sein, um so ein leichteres Verschrauben mit dem Schraubnippel 100 zu ermöglichen.

Das Überwurfbauteil 270 ist hierbei im Querschnitt im Wesentlichen L-förmig ausgestaltet, weist also neben dem zuvor erwähnten, sich im Wesentlichen parallel zu der Symmetrieachse 140 erstreckenden Abschnitt ferner einen im Wesentlichen senkrecht hierzu verlaufenden Abschnitt auf, der im Falle einer Verschraubung mit dem Außenverbindungsgewinde 250 des Schraubnippels 100 mit einer Haltestruktur 450 in Kontakt tritt. Über die Haltestruktur 450 und das Außen- bzw. Innenverbindungsgewinde 250, 260 kann so entlang der Symmetrieachse 140 eine formschlüssige Verbindung von Schraubnippel 100 und Schraubbuchse 110 ermöglichen.

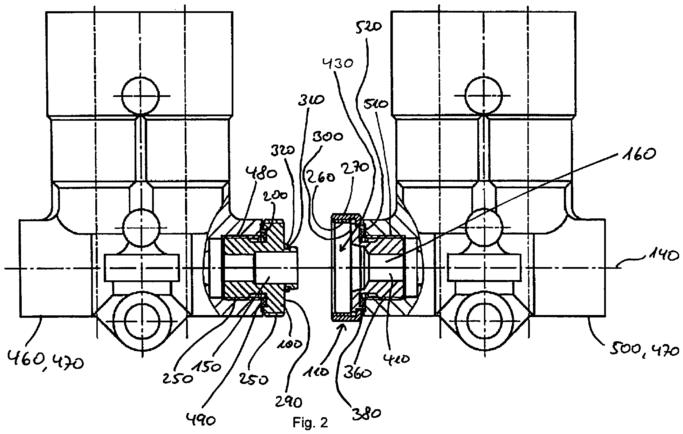

Fig. 2 zeigt eine Querschnittsdarstellung durch eine erste Hydraulikkomponente 460, bei der es sich genauer gesagt um einen Kolbenverteiler 470 handelt. Die erste Hydraulikkomponente 460 weist hierbei ein Innenmontagegewinde 480 auf, welches gerade so auf das Außenmontagegewinde 250 des Schraubnippels 100 ausgelegt ist, sodass der Schraubnippel 100 in das Innenmontagegewinde 480 und damit die erste Hydraulikkomponente 460 einschraubbar ist. Ebenso weist die erste Hydraulikkomponente 460 eine Dichtfläche 490 auf, gegen die die Montageweichdichtung 200 bei einem Einschrauben des Schraubnippels 100 in das Innenmontagegewinde 480 gepresst wird. Hierdurch entsteht die bereits zuvor beschriebene Dichtwirkung der Montageweichdichtung 200, welche das Austreten der Flüssigkeit aus dem Durchflusskanal 150 zwischen der ersten Hydraulikkomponente 460 und dem Schraubnippel 100 unterbindet.

Darüber hinaus zeigt Fig. 2 ebenso eine zweite Hydraulikkomponente 500, bei der es sich ebenfalls um einen Kolbenverteiler 470 handelt. Auch die zweite Hydraulikkomponente 500 weist ein Innenmontagegewinde 510 auf, welches gerade auf das Außenmontagegewinde 360 der Schraubbuchse 110 ausgelegt ist, sodass diese in die zweite Hydraulikkomponente 500 einschraubbar ist. Auch hier weist die zweite Hydraulikkomponente 500 wiederum eine Dichtfläche 520 auf, gegen die die Montageweichdichtung 380 der Schraubbuchse 110 bei einem Montieren derselben in die zweite Hydraulikkomponente 500 gedrückt wird. Auch hierdurch entsteht wiederum die zuvor beschriebene Dichtwirkung bezogen auf den Durchflusskanal 160 der Schraubbuchse 110. Die Dichtflächen 440, 520 der beiden Hydraulikkomponenten 460, 500 können hierbei beispielsweise angespiegelt ausgestaltet sein.

Fig. 2 zeigt so eine Querschnittsdarstellung durch die Situation, wenn der Schraubnippel 100 in die erste Hydraulikkomponente 460 und die Schraubbuchse 110 mit ihrem auch als Überwurfmutter bezeichneten Überwurfbauteil 270 in die zweite Hydraulikkomponente 500 eingeschraubt ist.

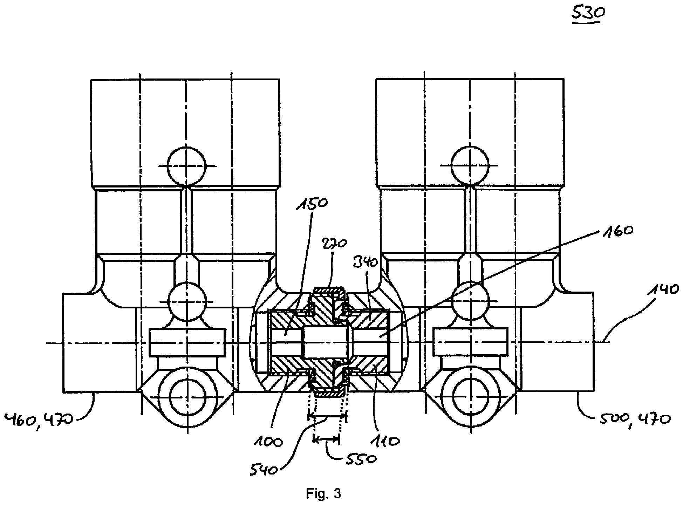

Fig. 3 zeigt schließlich eine Querschnittsdarstellung durch ein Hydrauliksystem 530 gemäß einem Ausführungsbeispiel, welches wiederum die beiden zuvor beschriebenen Hydraulikkomponenten 460, 500 sowie den Schraubnippel 100, die Schraubbuchse 110 und die zugehörigen Weichdichtungen 200, 320, 380 (nicht als solche mit Bezugszeichen in Fig. 3 bezeichnet) umfasst. Bei dem Hydrauliksystem 530 weisen die beiden Hydraulikkomponenten 460, 500 einen Abstand 540 entlang der Symmetrieachse 100 bzw. entlang der Durchflusskanäle 150, 160 auf, der höchstens 150 % einer Länge 550 des Überwurfbauteils 270 entlang der Symmetrieachse 140 entspricht. Aufgrund der Ausgestaltung mit den bereits zuvor beschriebenen Außen- und Innenmontagegewinden 170, 360, 480, 510 ist es so möglich, einen Abstand der betreffenden Hydraulikkomponenten 460, 500 voneinander im Wesentlichen auf die Länge 550 des Überwurfbauteils 270 zu begrenzen. So kann es gegebenenfalls bei anderen Ausführungsbeispielen möglich sein, den Abstand 540 bezogen auf die Länge 550 auf maximal 130 %, maximal 120 % oder maximal 110 % zu beschränken. So kann es gegebenenfalls möglich sein, den Abstand 540 auf ein zur Montage bzw. zum Verbinden von Schraubnippel 100 und Schraubbuchse 110 vorgesehenes Werkzeug, beispielsweise eine entsprechende Zange oder einen entsprechenden Schraubenschlüssel, zu begrenzen. Anders ausgedrückt kann eine Dicke bzw. Länge des Überwurfbauteils 270 einen Abstand der Hydraulikkomponenten 460, 500 entlang der Symmetrieachse 140 bestimmen.

Ausführungsbeispiele schaffen so eine Verschraubung zum Verbinden von zwei oder mehreren Kolbenverteilern 470 oder anderen Hydraulikkomponenten 460, 500 wie dies bereits zuvor beschrieben wurde. Der neue Verbinder gemäß einem Ausführungsbeispiel ist hierbei auf Basis von Weichdichtungen 200, 320, 380 ausgelegt, von denen die Montageweichdichtungen 200, 380 bei dem hier gezeigten Ausführungsbeispiel als Profildichtringe, die Verbindungsweichdichtung 320 als O-Ringdichtung ausgestaltet sind. Der Verbinder umfasst so bei dem hier gezeigten Ausführungsbeispiel im Wesentlichen neben den Weichdichtungen drei Bauteile, nämlich den Schraubnippel 100 sowie das Überwurfbauteil 270 und die Schraubhülse 340 der Schraubbuchse 110. Das Überwurfbauteil 270 wird hierbei häufig auch als Überwurfmutter bezeichnet. Durch den Einsatz eines solchen Ausführungsbeispiels kann so ein schnelles Montieren des Schraubnippels 100 und der Schraubbuchse 110 in den entsprechenden Hydraulikkomponenten 460, 500, also beispielsweise den entsprechenden Verteilerkörpern der Kolbenverteiler 470 möglich sein. Anders ausgedrückt wird das Gegenstück, die Schraubbuchse 110 mit ihrem Überwurfbauteil 270 in den weiteren Verteilerkörper des anderen Kolbenverteilers 470, also die zweite Hydraulikkomponente 500 geschraubt. Die Hydraulikkomponenten 460, 500 können so nun zueinander ausgerichtet und dann durch das Festziehen des Überwurfbauteils 270 verbunden. Hierbei wird der Schraubnippel 100 in die Schraubbuchse 110 gezogen. Die Abdichtung erfolgt über die beispielsweise als O-Ring ausgeführte Verbindungsweichdichtung 320. Für das Überwurfbauteil 270 ist hierbei eine vergleichsweise geringe Montagevorspannkraft nötig.

Ausführungsbeispiele können so beispielsweise besonders vorteilhaft bei Hydraulikkomponenten 460, 500 vorgesehen werden, deren Körper zu einem nicht unerheblichen Teil aus einem Druckgussmaterial, beispielsweise einem Zinkdruckgussmaterial hergestellt sind. Häufig kann bei einem solchen Material eine komplizierte bzw. filigrane Struktur, welche geeignet ist, um die betreffende Hydraulikkomponente zu dichten, nur mit größerem Aufwand implementiert werden.

So können Ausführungsbeispiele einerseits helfen, einen Bauraum einzusparen und dennoch eine Ausrichtung der Komponenten erst während des Zusammenbaus bzw. erst während des Verbindens der betreffenden Hydraulikkomponenten zueinander zu ermöglichen. So können beispielsweise aufgrund von modular aufgebauten Hydraulikkomponenten mithilfe von Ausführungsbeispielen kompakte, stabile und ausrichtbare Hydrauliksysteme geschaffen werden, die aufgrund ihrer Modularität eine hohe Flexibilität aufweisen, ohne einen erheblichen Anteil an Bauraum hierfür opfern zu müssen. Die Flexibilität kann gegebenenfalls dadurch weiter gesteigert werden, dass Schraubnippel 100 und Schraubbuchsen 110 miteinander durch eine entsprechende Kombination und Ausgestaltung des Außenverbindungsgewindes 250 und der Innenverbindungsgewinde 260 eingesetzt werden, die sich aber hinsichtlich ihrer Durchmesser der Durchflusskanäle 150, 160 unterscheiden. So können gegebenenfalls über den Einsatz entsprechender Schraubnippel 100 und Schraubbuchsen 110 auch Hydraulikkomponenten 460, 500 miteinander verbunden werden, die unterschiedliche Innenmontagegewinde 480, 510 aufweisen. So können gegebenenfalls beispielsweise Hydraulikkomponenten mit Gewinden M10x1 mit solchen mit einem Gewinde M12x1 miteinander gekoppelt werden, um nur ein Beispiel zu nennen.

Durch den Einsatz eines Ausführungsbeispiels kann gegebenenfalls möglich sein, eine leichter umzusetzende Verbindungstechnik zum stabilen und kompakten hydraulischen Verbinden zweier zueinander auszurichtender Hydraulikkomponenten zu schaffen.

## Patentansprüche

1. Zusammenstellungsprodukt umfassend einen Schraubnippel (100) und eine Schraubbuchse (110) zum stabilen und kompakten hydraulischen Verbinden zweier zueinander auszurichtender Hydraulikkomponenten (460, 500), wobei der Schraubnippel (100) umfasst:
einen Durchflusskanal (150), der ausgebildet ist, um die hydraulische Verbindung zwischen den zwei Hydraulikkomponenten (460, 500) wenigstens abschnittsweise zu schaffen;
ein Außenverbindungsgewinde (250), das derart ausgebildet und angeordnet ist, sodass dieses mit einem Innenverbindungsgewinde (260) eines Überwurfbauteils (270) der an einer zweiten Hydraulikkomponente (500) der zwei Hydraulikkomponenten montierten Schraubbuchse (110) verschraubbar ist, um die stabile und kompakte hydraulische Verbindung zwischen den zwei Hydraulikkomponenten (460, 500) zu schaffen, wenn der Schraubnippel (100) an einer ersten Hydraulikkomponente (460) montiert ist; und
eine Aufnahme (310) für eine Verbindungsweichdichtung (320), wobei die Aufnahme (310) für die Verbindungsweichdichtung (320) derart angeordnet ist, sodass die Verbindungsweichdichtung (320) in einem verbundenen Zustand gegen eine Dichtfläche (440) der Schraubbuchse (110) gepresst wird, sodass ein Austreten einer Flüssigkeit aus dem Durchflusskanal (150) zwischen dem Schraubnippel (100) und der Schraubbuchse (110) im Wesentlichen unterbunden wird;
wobei der Schraubnippel (100) ferner ein Außenmontagegewinde (170) umfasst, das ausgebildet ist, um in ein Innenmontagegewinde (480) der ersten Hydraulikkomponente (460) der zwei miteinander zu verbindenden Hydraulikkomponenten (460, 500) einschraubbar zu sein;
wobei die Schraubbuchse (110) umfasst:
eine Schraubhülse (340) und das Überwurfbauteil (270) mit dem Innenverbindungsgewinde (260),
wobei die Schraubhülse (340) einen Durchflusskanal (160) umfasst, der ausgebildet ist, um die hydraulische Verbindung zwischen den zwei Hydraulikkomponenten (460, 500) wenigstens abschnittsweise zu schaffen;
wobei die Schraubbuchse (110) ferner ein Außenmontagegewinde (360) umfasst, das ausgebildet ist, um in ein Innenmontagegewinde (510) der zweiten Hydraulikkomponente (500) der zwei miteinander zu verbindenden Hydraulikkomponenten (460, 500) einschraubbar zu sein.

2. Zusammenstellungsprodukt nach Anspruch 1, wobei das Außenverbindungsgewinde (250) und das Außenmontagegewinde (170) des Schraubnippels (100) hinsichtlich ihres Drehsinns unterschiedlich ausgeführt sind.

3. Zusammenstellungsprodukt nach Anspruch 1 oder 2, wobei der Schraubnippel (100) ferner einen Führungsabschnitt (280) aufweist, der ausgebildet ist, um einen Fluss einer durch den Durchflusskanal (150) strömenden Flüssigkeit zu führen, und der sich an einer ersten Hydraulikkomponente (460) abgewandten Seite des Schraubnippels (100) entlang des Durchflusskanals (150) über eine Position der Aufnahme (310) für die Verbindungsweichdichtung (320) hinaus erstreckt, wobei der Schraubnippel (100) an der ersten Hydraulikkomponente (460) montierbar ist.

4. Zusammenstellungsprodukt nach einem der vorhergehenden Ansprüche, wobei der Schraubnippel (100) ferner eine Aufnahme (190) für eine Montageweichdichtung (200) umfasst, die derart ausgebildet und angeordnet ist, um ein Austreten der Flüssigkeit aus dem Durchflusskanal (150) zwischen dem Schraubnippel (100) und der ersten Hydraulikkomponente (460) zu unterbinden, wobei die Aufnahme (190) für die Montageweichdichtung (200) derart angeordnet ist, sodass die Montageweichdichtung (200) in einem montierten Zustand gegen eine Dichtfläche (490) der ersten Hydraulikkomponente (460) gepresst wird.

5. Zusammenstellungsprodukt nach einem der vorhergehenden Ansprüche, wobei die Schraubbuchse (110) ferner eine Dichtfläche (440) umfasst, die derart ausgebildet und angeordnet ist, sodass eine in die Aufnahme (310) für eine Verbindungsweichdichtung (320) des Schraubnippels aufgenommene Verbindungsweichdichtung (320) in einem verbundenen Zustand von der Schraubbuchse (110) und dem Schraubnippel (100) gegen die Dichtfläche (440) gepresst wird, um ein Austreten einer Flüssigkeit aus dem Durchflusskanal (160) zwischen dem Schraubnippel (100) und der Schraubbuchse (110) zu unterbinden.

6. Zusammenstellungsproduktnach einem der vorhergehenden Ansprüche, wobei die Schraubbuchse (110) ferner eine Aufnahme (370) für eine Montageweichdichtung (380) umfasst, die derart ausgebildet und angeordnet ist, um ein Austreten einer Flüssigkeit aus dem Durchflusskanal (160) zwischen dem Schraubnippel (110) und der zweiten Hydraulikkomponente (500) zu unterbinden, wobei die Aufnahme (370) für die Montageweichdichtung (380) derart angeordnet ist, sodass die Montageweichdichtung (380) in einem montierten Zustand gegen eine Dichtfläche (520) der zweiten Hydraulikkomponente (500) gepresst wird.

7. Zusammenstellungsprodukt nach einem der vorhergehenden Ansprüche, wobei die Schraubbuchse (110) ferner eine Aufnahme (430) für einen Führungsabschnitt (280) des Schraubnippels (100) aufweist, wobei die Aufnahme (430) für den Führungsabschnitt (280) ausgebildet ist, um einen Fluss einer durch den Durchflusskanal (160) strömenden Flüssigkeit zu führen, wobei die Aufnahme (430) bezogen auf das Überwurfbauteil (270) auf eine dem Überwurfbauteil (270) abgewandten Seite hin zurückversetzt angeordnet ist, wenn die Schraubbuchse (110) mit dem Schraubnippel (100) verbunden ist.

8. Hydrauliksystem (530) mit folgenden Merkmalen:
einer ersten Hydraulikkomponente (460);
einer zweiten Hydraulikkomponente (500);
einem Zusammenstellungsprodukt aus einem Schraubnippel (100) und einer Schraubbuchse (110) nach einem der vorhergehenden Ansprüche, das an der ersten Hydraulikkomponente (460) und an der zweiten Hydraulikkomponente (500) montiert ist; und
einer Verbindungsweichdichtung (320), die in der Aufnahme (310) für die Verbindungsweichdichtung (320) des Schraubnippels (100) aufgenommen ist,
wobei der Schraubnippel (100) und die Schraubbuchse (110) miteinander über das Außenverbindungsgewinde (250) des Schraubnippels (100) und das Innenverbindungsgewinde (260) des Überwurfbauteils (270) verbunden sind.

9. Hydrauliksystem (530) nach Anspruch 8, bei dem die erste Hydraulikkomponente (460) von der zweiten Hydraulikkomponente (500) einen Abstand (540) voneinander entlang der Durchflusskanäle (150, 160) des Schraubnippels (100) und der Schraubbuchse (110) aufweist, der höchstens 150 % einer Länge (550) des Überwurfbauteils (270) der Schraubbuchse (110) entlang ihres Durchflusskanals (160) entspricht.

## Claims

1. Combined product comprising a screw nipple (100) and a threaded bush (110) for the stable and compact hydraulic connection of two hydraulic components (460, 500) which are to be aligned with respect to one another, the screw nipple (100) comprising:
a throughflow channel (150) which is configured to produce the hydraulic connection between the two hydraulic components (460, 500) at least in sections;
an external connecting thread (250) which is configured and arranged in such a way that it can be screwed to an internal connecting thread (260) of a sleeve component (270) of the threaded bush (110) which is mounted on a second hydraulic component (500) of the two hydraulic components, in order to produce the stable and compact hydraulic connection between the two hydraulic components (460, 500) when the screw nipple (100) is mounted on a first hydraulic component (460); and
a seat (310) for a soft connecting seal (320), the seat (310) for the soft connecting seal (320) being arranged in such a way that the soft connecting seal (320) is pressed against a sealing face (440) of the threaded bush (110) in a connected state, with the result that a discharge of a liquid from the throughflow channel (150) between the screw nipple (100) and the threaded bush (110) is substantially prevented;
the screw nipple (100) comprising, furthermore, an external mounting thread (170) which is configured to be capable of being screwed into an internal mounting thread (480) of the first hydraulic component (460) of the two hydraulic components (460, 500) which are to be connected to one another;
the threaded bush (110) comprising:
a threaded sleeve (340) and the union component (270) with the internal connecting thread (260),
the threaded sleeve (340) comprising a throughflow channel (160) which is configured to produce the hydraulic connection between the two hydraulic components (460, 500) at least in sections;
the threaded bush (110) comprising, furthermore, an external mounting thread (360) which is configured to be capable of being screwed into an internal mounting thread (510) of the second hydraulic component (500) of the two hydraulic components (460, 500) which are to be connected to one another.

2. Combined product according to Claim 1, the external connecting thread (250) and the external mounting thread (170) of the screw nipple (100) being of different configuration with regard to their rotational direction.

3. Combined product according to Claim 1 or 2, the screw nipple (100) having, furthermore, a guide section (280) which is configured to guide a flow of a liquid which flows through the throughflow channel (150), and extends, on a side of the screw nipple (100) which faces away from the first hydraulic component (460), along the throughflow channel (150) beyond a position of the seat (310) for the soft connecting seal (320), it being possible for the screw nipple (100) to be mounted on the first hydraulic component (460).

4. Combined product according to one of the preceding claims, the screw nipple (100) comprising, furthermore, a seat (190) for a soft mounting seal (200) which is configured and arranged in such a way as to prevent a discharge of the liquid from the throughflow channel (150) between the screw nipple (100) and the first hydraulic component (460), the seat (190) for the soft mounting seal (200) being arranged in such a way that the soft mounting seal (200) is pressed against a sealing face (490) of the first hydraulic component (460) in a mounted state.

5. Combined product according to one of the preceding claims, the threaded bush (110) comprising, furthermore, a sealing face (440) which is configured and arranged in such a way that a soft connecting seal (320) which is received in the seat (310) for a soft connecting seal (320) of the screw nipple is pressed against the sealing face (440) in a connected state of the threaded bush (110) and the screw nipple (100), in order to prevent a discharge of a liquid from the throughflow channel (160) between the screw nipple (100) and the threaded bush (110) .

6. Combined product according to one of the preceding claims, the threaded bush (110) comprising, furthermore, a seat (370) for a soft mounting seal (380) which is configured and arranged so as to prevent a discharge of a liquid from the throughflow channel (160) between the screw nipple (110) and the second hydraulic component (500), the seat (370) for the soft mounting seal (380) being arranged in such a way that the soft mounting seal (380) is pressed against a sealing face (520) of the second hydraulic component (500) in a mounted state.

7. Combined product according to one of the preceding claims, the threaded bush (110) having, furthermore, a seat (430) for a guide section (280) of the screw nipple (100), the seat (430) for the guide section (280) being configured to guide a flow of a liquid which flows through the throughflow channel (160), the seat (430) being arranged, in relation to the union component (270), set back towards a side which faces away from the union component (270) when the threaded bush (110) is connected to the screw nipple (100).

8. Hydraulic system (530) having the following features:
a first hydraulic component (460);
a second hydraulic component (500);
a combined product comprising a screw nipple (100) and a threaded bush (110) according to one of the preceding claims, which combined product is mounted on the first hydraulic component (460) and on the second hydraulic component (500); and
a soft connecting seal (320) which is received in the seat (310) for the soft connecting seal (320) of the screw nipple (100),
the screw nipple (100) and the threaded bush (110) being connected to one another via the external connecting thread (250) of the screw nipple (100) and the internal connecting thread (260) of the union component (270).

9. Hydraulic system (530) according to Claim 8, in which the first hydraulic component (460) is at a spacing (540) from the second hydraulic component (500) along the throughflow channels (150, 160) of the screw nipple (100) and the threaded bush (110), which spacing (540) corresponds to at most 150% of a length (550) of the union component (270) of the threaded bush (110) along its throughflow channel (160).

## Revendications

1. Produit d'assemblage comprenant un raccord fileté (100) et une douille filetée (110) destinés au raccordement hydraulique stable et compact de deux composants hydrauliques (460, 500) à aligner l'un avec l'autre, le raccord fileté (100) comprenant :
un conduit d'écoulement (150) conçu pour établir au moins par endroits le raccordement hydraulique entre les deux composants hydrauliques (460, 500) ;
un filetage de raccordement extérieur (250) conçu et agencé de manière à pouvoir être vissé sur un filetage de raccordement intérieur (260) d'un composant d'accouplement (270) de la douille filetée (110) montée sur un deuxième composant hydraulique (500) des deux composants hydrauliques pour établir le raccordement hydraulique stable et compact entre les deux composants hydrauliques (460, 500) lorsque le raccord fileté (100) est monté sur un premier composant hydraulique (460) ; et
un logement (310) destiné à une garniture d'étanchéité de raccordement souple (320), le logement (310) destiné à la garniture d'étanchéité de raccordement souple (320) étant agencé de telle sorte que la garniture d'étanchéité de raccordement souple (320) soit pressée contre une surface d'étanchéité (440) de la douille filetée (110) dans un état raccordé de manière à empêcher sensiblement un liquide de sortir du conduit d'écoulement (150) entre le raccord fileté (100) et la douille filetée (110) ;
le raccord fileté (100) comprenant en outre un filetage de montage extérieur (170) conçu pour pouvoir être vissé dans un filetage de montage intérieur (480) du premier composant hydraulique (460) des deux composants hydrauliques (460, 500) ;
la douille filetée (110) comprenant :
un manchon fileté (340) et l'élément d'accouplement (270) pourvu du filetage de raccordement intérieur (260), le manchon fileté (340) comprenant un conduit d'écoulement (160) conçu pour établir au moins par endroits le raccordement hydraulique entre les deux composants hydrauliques (460, 500) ;
la douille filetée (110) comprenant en outre un filetage de montage extérieur (360) conçu pour pouvoir être vissé dans un filetage de montage intérieur (510) du deuxième composant hydraulique (500) des deux composants hydrauliques (460, 500).

2. Produit d'assemblage selon la revendication 1, dans lequel le filetage de raccordement extérieur (250) et le filetage de montage extérieur (170) du raccord fileté (100) sont conçus différemment en termes de sens de rotation.

3. Produit d'assemblage selon la revendication 1 ou 2, dans lequel ledit raccord fileté (100) comprend en outre une partie de guidage (280) qui est conçue pour guider un écoulement d'un liquide s'écoulant à travers le conduit d'écoulement (150) et qui s'étend, du côté du raccord fileté (100) qui est opposé à un premier composant hydraulique (460), le long du conduit d'écoulement (150), au-delà d'une position du logement (310) destiné à la garniture d'étanchéité de raccordement souple (320), le raccord fileté (100) pouvant être monté sur le premier composant hydraulique (460) .

4. Produit d'assemblage selon l'une des revendications précédentes, dans lequel le raccord fileté (100) comprend en outre un logement (190), destiné à une garniture d'étanchéité de montage souple (200), qui est conçu et agencé de manière à empêcher le liquide de sortir du conduit d'écoulement (150) entre le raccord fileté (100) et le premier composant hydraulique (460), le logement (190) destiné à la garniture d'étanchéité de montage souple (200) étant agencé de telle sorte que la garniture d'étanchéité de montage souple (200) soit pressée à l'état monté contre une surface d'étanchéité (490) du premier composant hydraulique (460).

5. Produit d'assemblage selon l'une des revendications précédentes, dans lequel la douille filetée (110) comporte en outre une surface d'étanchéité (440) conçue et agencée de sorte qu'une garniture d'étanchéité de raccordement souple (320), logée dans le logement (310) destiné à une garniture d'étanchéité de raccordement souple (320) du raccord fileté, soit pressée dans un état raccordé contre la surface d'étanchéité (440) par la douille filetée (110) et le raccord fileté (100) pour empêcher un liquide de sortir du conduit d'écoulement (160) entre le raccord fileté (100) et le manchon fileté (110).

6. Produit d'assemblage selon l'une des revendications précédentes, dans lequel la douille filetée (110) comporte en outre un logement (370), destiné à la garniture d'étanchéité de montage souple (380), qui est conçu et agencé pour empêcher un liquide de sortir du conduit d'écoulement (160) entre le raccord fileté (110) et le deuxième composant hydraulique (500), le logement (370) destiné à la garniture d'étanchéité de montage souple (380) étant agencé de telle sorte que la garniture d'étanchéité de montage souple (380) soiet pressée à l'état monté contre une surface d'étanchéité (520) du deuxième composant hydraulique (500).

7. Produit d'assemblage selon l'une des revendications précédentes, dans lequel la douille filetée (110) comporte en outre un logement (430) destiné à une partie de guidage (280) du raccord fileté (100), le logement (430) destiné à la partie de guidage (280) étant conçu pour guider un écoulement d'un liquide s'écoulant à travers le conduit d'écoulement (160), le logement (430) étant disposé en retrait par rapport au composant d'accouplement (270) sur un côté opposé au composant d'accouplement (270) lorsque la douille filetée (110) est raccordée au raccord fileté (100) .

8. Système hydraulique (530) comprenant les éléments caractéristiques suivants :
un premier composant hydraulique (460) ;
un deuxième composant hydraulique (500) ;
un produit d'assemblage qui comprend un raccord fileté (100) et une douille filetée (110) selon l'une des revendications précédentes, et qui est monté sur le premier composant hydraulique (460) et sur le deuxième composant hydraulique (500) ; et
une garniture d'étanchéité de raccordement souple (320) qui est logée dans le logement (310) destiné à la garniture d'étanchéité de raccordement souple (320) du raccord fileté (100), le raccord fileté (100) et la douille filetée (110) étant raccordés l'un à l'autre par le biais du filetage de raccordement extérieur (250) du raccord fileté (100) et du filetage de raccordement intérieur (260) de l'élément d'accouplement (270).

9. Système hydraulique (530) selon la revendication 8, dans lequel le premier composant hydraulique (460) est à une distance (540) du deuxième composant hydraulique (500) le long des conduits d'écoulement (150, 160) du raccord fileté (100) et de la douille filetée (110), laquelle distance correspond au maximum à 150 % de la longueur (550) du composant d'accouplement (270) de la douille filetée (110) le long de son conduit d'écoulement (160).
